# EUROPEAN PATENT APPLICATION

(11) **EP 2 738 441 A2**
(43) Date of publication of application: **04.06.2014**
(21) Application number: 13195324.2
(22) Date of filing: 02.12.2013
(51) Int. Cl.: F16M 11/04, F16M 11/10

(54) **A device for attaching an object to a stand**

(30) Priority: 03.12.2012 SE 1200740
(71) Applicant: APEA Mobile Security Solutions AB, 351 96 Växjö (SE)
(72) Inventor: Thorén, Per-Olov, 360 73 Lenhovda (SE)
(74) Representative: Reyier, Ann-Mari

(57) **Abstract**

The present invention relates to a device for attaching an object to a stand comprising a fastening element (2) and a receiving portion (9) arranged in an object, whereby a locking of the object is achieved by a relative rotation between the fastening element and receiving portion. The fastening element is T-shaped and comprises a pillar (1), which at one end is designed for attachment to the stand and at a second end is provided with a crossbar (3) arranged crosswise to the pillar, whereby the receiving portion comprises a cavity (13a, 13b) with an opening (8), which allows entry of the crossbar. The opening is constructed to prevent exit of the crossbar after rotation and the receiving portion comprises at least one resilient lug (12a, 12b) protruding in the cavity, which locks the fastening element and the receiving portion in a locking position.

## Description

### The field of the invention

The present invention refers to a device for attaching an object, such as an instrument, for example a sensor, or a measuring instrument, to a stand, such as a tripod. The invention also relates to a method for attaching an object to a stand using said device.

### Background of the invention and prior art

A stand, such as a tripod, is usually a rack with legs that is used to hold up an object. A stand can be used for holding an object, such as a camera, a video camera, binoculars or a measuring instrument. A stand is used to hold an object in a stable manner and prevents an object from moving out of position. Movement, vibrations, and the like of the object can be avoided with the help of a stand.

A socket of the stand, also known as stand head or stand-mount, is a part of the stand that attaches the object to the stand. This may be a screw attached to a stand head, which is threaded into a corresponding nut assembly of the object. Screw constructions may comprise a small circular plate upon which the object rests when it is attached to the stand. The stand-head is often hinged. A common hinge is a ball and socket joint with a locking device. For applications with a video camera usually a single joint with handles is used.

US 5,267,712 discloses a stand used for adjustably securing a video camera. The stand contains a stand head with three separate bearings, which permits rotation about a vertical axis and a horizontal axis as well as a further axis that allows the camera to be tilted sideways. For rotation about the horizontal axis the stand contains a handle.

In a harsh environment, such as a workplace in industry or a construction site, where employees often use gloves, a stand with small parts is unsuitable. Small buttons and screws are difficult to deal with when wearing gloves. Further, the threads of screws may be damaged or sprout again by dirt in the local atmosphere.

Hot work is performed in many different industries. Hot work means welding, cutting, brazing, roofing, working with high-speed tools and other work that involves heating or sparking. Even waterproofing work on roofs is a hot work when materials are heated. A problem associated with the performance of hot work is that there is a risk of fires that may occur both during the work and after the work is completed. Today, a human fire guard is used to monitor the workplace during the time the work is performed and after the work has been carried out. Using human fire guards is expensive. When working in hazardous and/or cordoned-off production sites, for example where an emergency maintenance work is performed to get production going again, it may be impossible to monitor the site by a human fire guard. There is thus a need for monitoring equipment that is complementary to the human fire guard during and after hot work. The monitoring equipment preferably makes it possible, at least for a period, to monitor hot work without any human fire guard at the site. Hot works may be performed in environments where the sites are very diverse in their design. The sites may be at high ceiling, surfaces of building structures, a number of adjacent spaces, etc. Because working environments are different for each work place, high demands are made on the equipment in terms of adaptability to different working environments. The monitoring equipment must be flexible, easy to move between sites and easy to set up and put in place. The monitoring equipment must also be able to withstand dirty and hot environments.

### Summary of the invention

The object of the invention is to provide ways to easily and quickly attach and detach an object, such as a monitoring equipment or detector unit, to a stand, such as a tripod. A further object is to provide a device, which overcomes the above mentioned problems.

According to a first aspect of the invention, the object is achieved with a device according to claim 1, characterized in that the fastening element is T-shaped and comprises a pillar, which at one end is designed for attachment to the stand and at a second end is provided with a crossbar arranged crosswise to the pillar, whereby the receiving portion comprises a cavity with an opening, which allows entry of the crossbar in the cavity, and the opening is constructed to prevent exit of the crossbar after rotation, and whereby the receiving portion comprises at least one resilient lug protruding in the cavity, whereby the at least one resilient lug locks the fastening element and the receiving portion in a locking position. In one embodiment, a crossbar is arranged perpendicular to the pillar.

The device comprises a fastening element and a receiving portion. The receiving portion is arranged in the object. A locking of the object is achieved by a relative rotation between the fastening element and receiving portion. The fastening element is T-shaped and comprises a pillar extending along a second longitudinal axis and a crossbar extending along a first longitudinal axis. The pillar is at one end designed or formed for attaching to the stand and at a second end provided with the crossbar arranged crosswise to the pillar. The receiving portion comprises a cavity with an opening, which opening allows entry of the crossbar in a first direction extending along the second axis extending along the pillar. The opening is constructed to prevent exit of the crossbar after rotation. The receiving portion comprises at least one resilient lug protruding in the cavity, which locks the fastening element and the receiving portion in a locking position.

With such a device, an object can easy and quick be attached to a stand. The device also allows for easy and quick removal of the object from the stand.

In one embodiment of the invention, the crossbar comprises a tap arranged at each end of the crossbar having a rectangular cross section and an intermediate portion having a circular cross section.

In another embodiment of the invention, the cavity comprises
- a first space having a design adapted to the shape of the crossbar to be able to receive the crossbar when the fastening element is inserted through the opening in a direction extending along a second longitudinal axis extending along the pillar, and
- a second space having a design adapted to the shape of the pillar by rotation of the fastening element around a first longitudinal axis extending along the crossbar and said at least one resilient lug is arranged such that the crossbar is held in a locking position when the pillar is in the second space.

In one embodiment of the invention, the first space is a substantially cylindrical cavity and has a radial opening adapted to receive the crossbar.

According to a further embodiment of the invention, the cavity is adapted to receive the crossbar when the fastening element is inserted through the opening in a direction extending along the second longitudinal axis of the pillar, and the cavity is designed to allow a rotation of the fastening element around the second longitudinal axis of the pillar such that the crossbar passes the at least one resilient lug and the at least one resilient lug is arranged to hold the crossbar in a locking position after rotation.

In one embodiment of the invention, the receiving portion comprises two fences disposed in the cavity against which the taps of the crossbar rest after rotation.

In another embodiment of the invention, the receiving portion comprises two resilient lugs.

In one embodiment of the invention, the object is a detector unit comprising a sensor.

According to another aspect of the invention, the object of the invention is achieved by a stand for securing an object comprising a device, as defined above, for attaching the object to the stand.

According to a third aspect of the invention, the object of the invention is achieved by a method for securing an object to a stand using the device, as defined above, **characterized in** that the object is provided with the receiving portion, whereby the crossbar is caused to pass through the opening of the cavity provided in the object, and whereby the pillar is rotated relative to the receiving portion into a locking position, where the crossbar is prevented from exiting the opening and the pillar is kept secured by means of the at least one resilient lug.

In one embodiment of the method, the crossbar is inserted into the first space in the cavity, and locking is performed by rotating the receiving section relative to the fastening element about the first axis, whereby the pillar is inserted into the second space, and the pillar is caused to pivot to a locking position in the object, and whereby the pillar intrudes in the space in the object and is locked in its pivoted position by the at least one resilient lug, which encloses the pillar in the cavity.

In an alternative embodiment of the method, the crossbar is inserted into the first space in the cavity, locking is performed by rotating the receiving portion relative to the fastening element about the second axis and is caused into a locking position, whereby the crossbar rotates inside a flat cylinder of the receiving portion, and the crossbar, in the locking position, is oriented angularly towards the opening and both taps rest against a respective fence arranged in the cylinder.

In one embodiment of the invention, the rotation is about 90 degrees or 90 degrees.

By the method, the crossbar is caused to pass through the opening of the cavity provided in the object, and the pillar is rotated relative to the receiving portion to a locking position, where the crossbar is prevented from exiting the opening and the pillar is kept secured by means of the resilient lugs.

The object of the invention is also achieved by a use of a device, as defined above, for securing a detector unit to a stand, when monitoring work that involves heating or sparking, wherein the receiving portion is disposed in a housing that surrounds the detector unit.

The object of the invention is also achieved by a use of method, as defined above, for securing a detector unit to a stand, when monitoring work that involves heating or sparking, wherein the receiving portion is disposed in a housing that surrounds the detector unit.

Especially, for the monitoring of hot work it is desirable to use detachable detector units comprising sensors that communicate with an external server unit. The sensors are, for example intended for detecting fire and may comprise a smoke detector, a heat detector, a camera, a motion detector, a heat camera, an infrared camera, or a combination thereof. The detector unit is placed near the site to be monitored, where there is a risk that fires can occur. A removable and foldable stand, for example with a telescopic rod, can be used to hold up the detector unit, such that the detector unit is kept at an appropriate distance from the floor or ground level. The detector unit may be provided with a housing that surrounds the sensor. Preferably, the detector unit can be quickly and easily attached to the stand and quickly and easily detached from the stand. A device according to the invention can advantageously be used to attach a detector unit on a stand for monitoring hot work. This is especially true when the receiving portion is provided in the housing, which surrounds the detector unit.

### Brief description of the drawings

The invention will be further explained by description of embodiments with reference to the enclosed drawing.
- Figure 1: shows an example of fastening element of the invention comprising a pillar and a crossbar.
- Figure 2: shows a top view of the fastening element.
- Figure 3: shows a receiving portion for receiving the fastening element of a first embodiment.
- Figure 4: shows a receiving portion for receiving the fastening element of a second embodiment.
- Figure 5: shows use of a device of the invention for attaching an object to a stand.
- Figures 6a-b: show an embodiment of a fastening element usable together with the receiving portion shown in Figure 4.
- Figures 7a-b: show how a detector unit can be secured on a stand with the aid of a fastening element according to the first embodiment of the invention.

### Detailed description of various embodiments of the invention

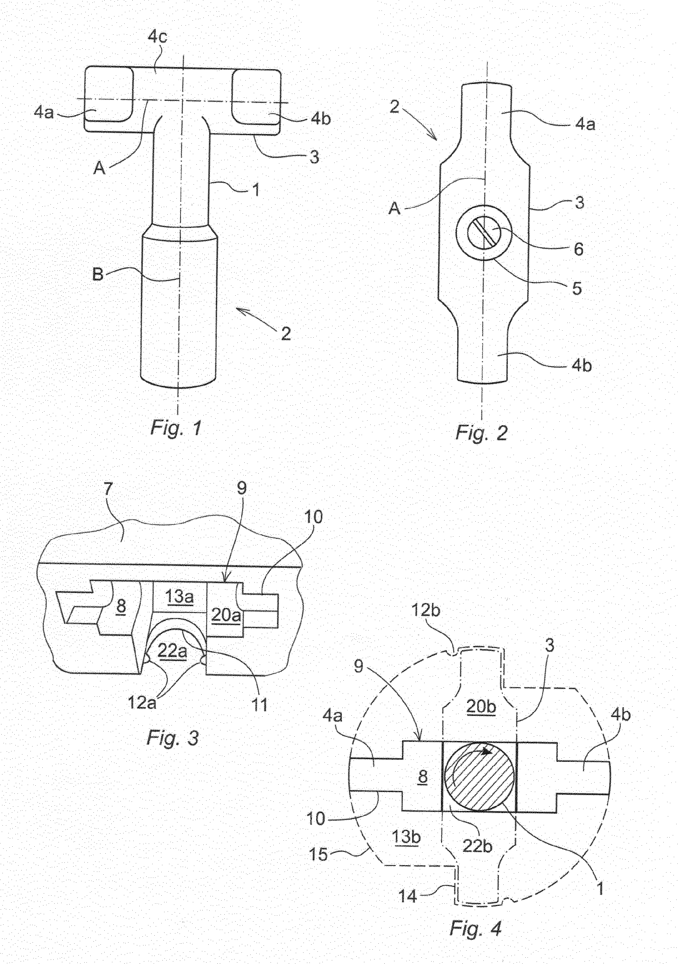

Figures 1 and 2 show an embodiment of a device 1 comprising a fastening element 2 and a receiving portion 9. The receiving portion 9 is arranged in an object, such as shown in Figure 3 and 4. The fastening element 2 is T-shaped and comprises a pillar 1 extending along a second longitudinal axis B and a crossbar 3 extending along a first longitudinal axis A. The pillar 1 is an elongated column extending along the second axis B. The pillar 1 provides support for the crossbar 3 and is normally oriented vertically in relation to a ground level or floor. The pillar 1 has two ends, whereby one end has an attachment 2b for connecting the device 1 to a stand and whereby the other end is provided with the crossbar 3. The crossbar 3 is arranged to support the object and is normally oriented horizontally in relation to a ground level or floor. The crossbar 3 forms an elongated body, which extends along the first axis A. The crossbar 3 is arranged crosswise or perpendicular to the pillar 1. A cavity 13 is integrated in the object and comprises an opening 8 arranged to receive the crossbar 3.

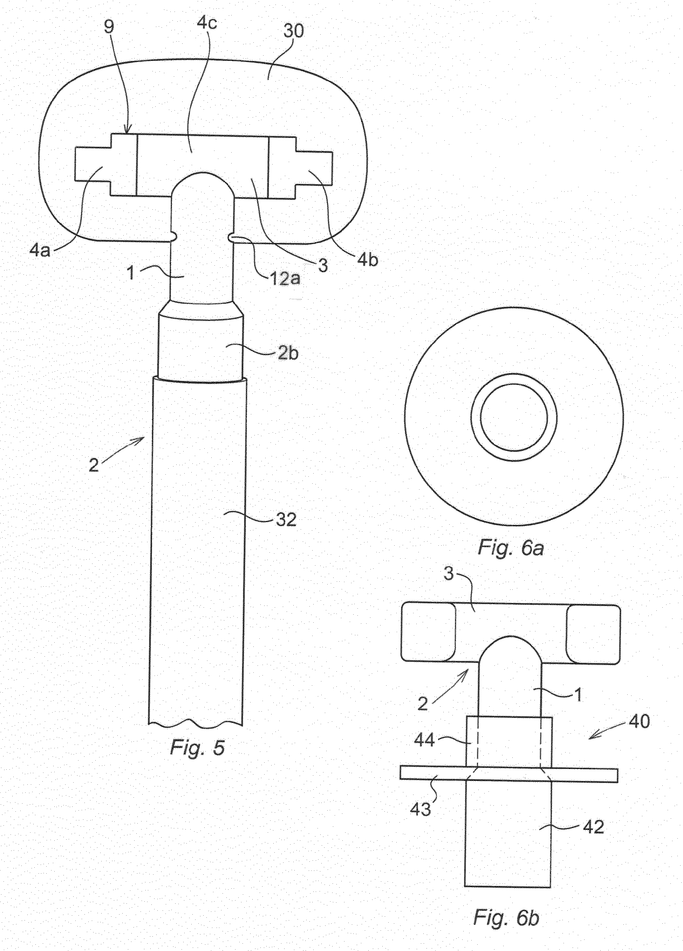

As shown in Figure 3, the receiving portion 9 comprises a cavity 13a, 13b with an opening 8. The cavity 13a, 13b allows entry of the crossbar 3 in a first direction extending along a second longitudinal axis B of the pillar. The opening 8 is constructed to prevent exit of the crossbar 3 after rotation of the fastening element 2 around a first longitudinal axis A of the crossbar 3. The receiving portion 9 comprises at least one resilient lug 12a, 12b protruding in the cavity 13a, 13b, which locks the fastening element 2 and receiving portion 9 in a locking position. In the illustrated embodiments (Figure 5), two lugs 12a, 12b are arranged.

The fastening element 2 is arranged to be inserted in the receiving portion 9. The crossbar 3 is an elongated body extending along the first longitudinal axis A. The crossbar 3 has two ends, and in each end the crossbar is provided with a tap 4a-b. The taps 4a-b may have a substantially rectangular cross section. The crossbar 3 has an intermediate portion 4c between the two ends. This portion 4c may have a circular cross section. The pillar 1 forms an elongated body extending along the second longitudinal axis B of the pillar 1. The fastening element 2 is preferably symmetrical on each side of the axis B. The crossbar 3 may for example be attached to the pillar 1 with a screw joint comprising a screw 6 and a plate 5 as shown in Figures 6a-6b.

The fastening element 2 is intended to be attached or secured to a stand. A suitable stand comprises a stance and a telescopic tube or rod, which parts are separable such that it can be placed in a carrying case.

A first embodiment of a receiving portion 9 is shown in Figure 3. The receiving portion 9 comprises a cavity 13 forming an elongated cylinder. The cavity 13 has a radial opening 8 adapted to receive the crossbar 3 of the fastening element 2. The shape of the opening 8 is adapted to the cross section of the crossbar 3 and includes tapered outer portions 10, which allow passage of the taps 4a-b of the crossbar 3.

When locking, the crossbar 3 is caused to pass the opening 8 in a direction extending along the second axis B of the pillar 1 to occupy the cavity 13. Then, the fastening element 2 is rotated relative to the object about the first axis A. Through this rotation the crossbar 3 is caused to take a position, where the rectangular taps 4a, 4b are prevented to exit. The pillar 1 is simultaneously brought into a locking position 11, where the pillar 1 is locked because at least one, or two resilient lugs 12a, 12b protrude in the receiving portion 9, which encloses the pillar 1.

A second embodiment of the invention is shown in Figure 4, where the cavity 13b is a flat cylinder 15. The cavity 13 has an axial opening 8, which allows reception of the crossbar 3 of the fastening element 2. The opening 8 shows, in the illustrated example of Figure 3, similar tapered outer portions 10. When locking, the crossbar 3 is caused to pass the opening 8 in a direction extending along the second axis B to occupy the cavity 13. Then, the fastening element 2 is rotated relative to the object about the second axis B. Through this rotation, the crossbar 3 is caused to assume a locking position (dotted line). In this locking position, the taps 4a, 4b rest against a respective fence 14 disposed in the cavity. The crossbar 3 is locked in its locking position by at least one, or two resilient lugs 12a, 12b protruding in the cavity 13, which encloses the crossbar 3.

Figures 6a-b show an embodiment of the fastening element 2 that can be used together with the receiving portion 9, which is shown in Figure 4. Figure 6a shows the fastening element 2 from the side, and Figure 6b shows the fastening element 2 from the side. The fastening element 2 comprises a support means 40 having a sleeve 42 and a plate 43, designed such that the sleeve 42 can be threaded on the existing T-fastener 2, when used as a bayonet fastener. The part of the sleeve 42, which sticks out above the plate 43 is called a neck 44. This embodiment has advantages of stabilizing the object, which rests on the plate 43, and obtaining a larger diameter of the outside diameter of the neck 44 than the crossbar 3 in the T-fastener 2. This causes the neck of the plate 43 to acquire a larger mounting surface in the object, which further increases the stability. The plate 43 need not be secured in the stand but can advantageously rotate when rotating the fastening element 2 into and out of the locking position.

In the first embodiment, the receiving portion 9 comprises the cavity 13a, a first space 20a adapted to receive the crossbar 3, when the fastening element 2 is inserted in the opening 8 in a direction extending along the second longitudinal axis B of the pillar 1, and a second space 22a adapted to receive the pillar 1 after rotation of the fastening element 2 around the first longitudinal axis A of the crossbar 3. The at least one resilient lug 12a is arranged such that the crossbar 3 is held in a locking position, when the pillar 1 is in the second space 22a as shown in Figure 3.

Both end portions 10 of the crossbar 3 are tapered, such that its two outer ends form a respective tap 4a, 4b having a rectangular cross section. The long sides of the rectangular cross section extend along the second axis B of the pillar 1. The cavity 13 comprises an internal transversely orientated circular cylinder 15 extending along the first axis A of the crossbar 3. The cavity 13 exhibits a radial opening allowing the crossbar 3 to enter in a predetermined direction. The opening 8 is thus fully open along a middle portion but is tapered toward the ends. The taperings allow the rectangular taps 4a, 4b to pass with its narrow sides but not with its broader sides.

In a first step of attaching the object to the stand, the crossbar 3 is inserted into the first space 20 in the cavity 13a. Thereafter, locking is performed when the receiver section 9 is rotated relative to the fastening element 2 about the first axis A. Hereby, the pillar 1 is inserted into the second space 22. Upon rotation about the first axis A, the rectangular part on the broad side of the taps 4a, 4b will lie in front of the opening 8. Upon rotation, which preferably is about 90 degrees, the pillar 1 is caused to pivot to a locking position in the object. The pillar 1 intrudes thereby in the space 22a in the object and is locked in its pivoted position of one or more resilient lugs 12a, 12b, which encloses the pillar 1 in the cavity.

In a second embodiment the receiving portion 9, such as shown in Figure 4, locking is performed when the receiving portion 9 is rotated relative to the fastening element 2 about the second axis B and is caused into locking when one or more resilient lugs 12a, 12b enclose both taps 4a, 4b of the crossbar 3. The cavity 13b forms a flat cylinder 15 and contains a slot-shaped axial opening 8 arranged to receive the crossbar 3. Upon rotation about the second axis B, the crossbar 3 rotates inside the flat cylinder 15. In its locking position, the crossbar 3 is oriented angularly towards the opening 8 and can thus not exit. Upon rotation, which preferably is about 90 degrees, both taps 4a, 4b of the crossbar 3 are brought into a locking position, where the taps 4a, 4b rest against a respective fence 14 arranged in the cylinder 15. In the locking position, the crossbar 3 is locked by passage of the resilient lugs 12a, 12b which protrude in the cavity 13 that encloses the taps. Although it is advantageous, the crossbar 3 in this embodiment need not be provided with tapered taps 4a, 4b.

Figure 5 shows a use of the device of the invention for attaching or securing an object 30, for example a detector unit, to a stand 32.

It is desirable to use a removable detector unit comprising one or more sensor that communicate directly with an external server unit and has its own power supply. The sensor is, for example, intended to detect fire and can comprise a smoke detector, a heat detector, a camera, a motion detector, a heat or infrared camera, or any combination thereof. Because the detector unit is removable, it is possible to position the sensor close to the site, which must be monitored, for example close to a site where a fire may occur. In this way, dangerous, hazardous, enclosed and/or cordoned production areas can be monitored and alarms can be arranged without a human guard needing to be present or to remain on the site. If the device is stored in a bag, the bag may contain several detector units. The detector units can be placed in different places and this way a larger area can be monitored.

A removable and foldable stand, for example with a telescopic rod, can be used to hold up the detector unit, such that the detector unit is kept at an appropriate distance from the floor or ground. The detector unit may be provided with a housing that surrounds the sensor. According to the invention, the housing is provided with a receiving portion 9 to receive the fastening element 2.

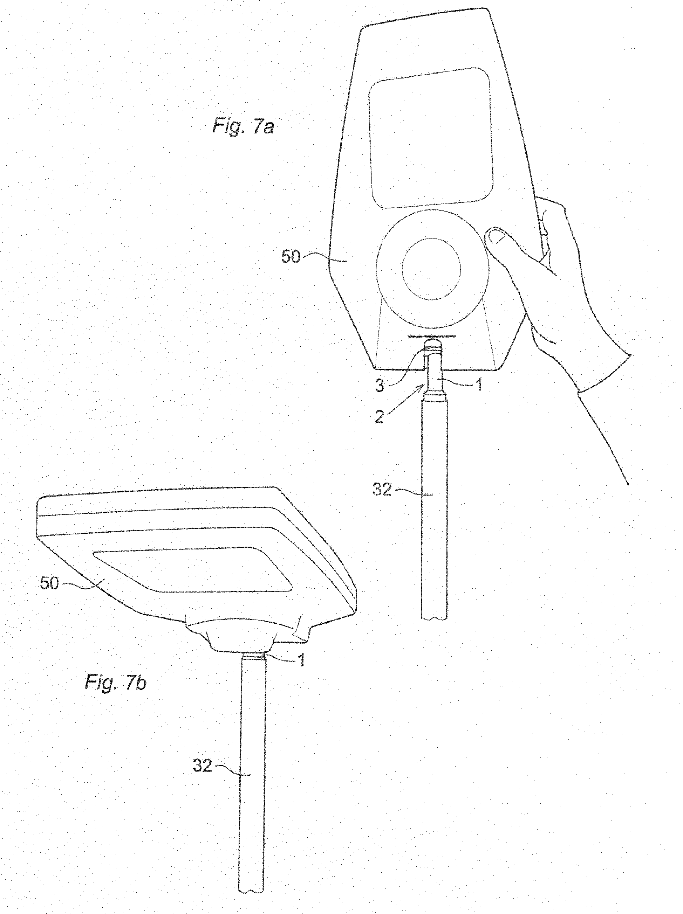

Figures 7a-b show how an object in the form of a detector unit 50 can be attached to a stand 32 with help of the fastening element 2 of the first embodiment of the invention. The attachment occurs in two steps. In a first step, the opening 8 in the receiving portion 9 of the detector unit is threaded on the crossbar 3 as shown in Figure 7a. In a second step, the pillar 1 is rotated relative to the receiving portion 9 to a locking position, where the crossbar 3 is prevented from exiting by the opening 8. The pillar 1 is kept secured by means of the resilient lugs 12a as shown in Figure 7b.

The invention is not limited to the disclosed embodiments. In the latter embodiment for example the taps 4a, 4b do not need to have a rectangular cross section. The crossbar 3 in this case may be circular as well as square or polygonal.

## Claims

1. A device for attaching an object to a stand comprising a fastening element (2) and a receiving portion (9), which receiving portion (9) is arranged in an object, whereby a locking of the object is achieved by a relative rotation between the fastening element (2) and the receiving portion (9), **characterized in that** the fastening element (2) is T-shaped and comprises a pillar (1), which at one end is designed for attachment to the stand and at a second end is provided with a crossbar (3) arranged crosswise to the pillar (1), whereby the receiving portion (9) comprises a cavity (13a, 13b) with an opening (8), which allows entry of the crossbar (3) in the cavity (13a, 13b), and the opening (8) is constructed to prevent exit of the crossbar (3) after rotation, and whereby the receiving portion (9) comprises at least one resilient lug (12a, 12b) protruding in the cavity (13a; 13b), whereby the at least one resilient lug (12a, 12b) locks the fastening element (2) and the receiving portion (9) in a locking position.

2. The device according to claim 1, wherein the crossbar (3) comprises a tap (4a, 4b) arranged at each end of the crossbar (3) having a rectangular cross section and an intermediate portion (4c) having a circular cross section.

3. The device according to claim 1 or 2, wherein the cavity (13a) comprises:
- a first space (20a) having a design adapted to the shape of the crossbar (3) to be able to receive the crossbar (3) when the fastening element (2) is inserted through the opening (8) in a direction extending along a second longitudinal axis (B) extending along the pillar (1), and
- a second space (22a) having a design adapted to the shape of the pillar (1) to be able to receive the pillar (1) by rotation of the fastening element (2) around a first longitudinal axis (A) extending along the crossbar (3) and said at least one resilient lug (12a, 12b) is arranged such that the crossbar (3) is held in a locking position when the pillar (1) is in the second space (22a).

4. The device according to claim 3, wherein the first space (20a) is a substantially cylindrical cavity and has a radial opening (8) adapted to receive the crossbar (3).

5. The device according to claim 1 or 2, wherein the cavity (13b) is adapted to receive the crossbar (3) when the fastening element (2) is inserted through the opening (8) in a direction extending along the second longitudinal axis (B) of the pillar (1), and the cavity (13b) is designed to allow a rotation of the fastening element (2) around the second longitudinal axis (B) of the pillar (1) such that the crossbar (3) passes the at least one resilient lug (12a, 12b) and the at least one resilient lug (12a, 12b) is arranged to hold the crossbar (3) in a locking position after rotation.

6. The device according to claims 2 and 5, wherein the receiving portion (9) comprises two fences (14) disposed in the cavity (13) against which the taps (4a-b) of the crossbar (3) rest after rotation.

7. The device according to any one of claims 1 to 6, wherein the receiving portion (9) comprises two resilient lugs (12a, 12b).

8. The device according to any one of claims 1 to 7, wherein the object is a detector unit comprising a sensor.

9. A stand for securing an object comprising a device according to any one of claims 1 to 8 for attaching the object to the stand.

10. A method for securing an object (30) to a stand using the device according to any one of claims 1 to 8, **characterized in that** the object is provided with the receiving portion (9), whereby the crossbar (3) is caused to pass through the opening (8) of the cavity (13a, 13b) provided in the object, and whereby the pillar (1) is rotated relative to the receiving portion (9) into a locking position, where the crossbar (3) is prevented from exiting the opening (8) and the pillar (1) is kept secured by means of the at least one resilient lug (12a, 12b).

11. A method for attaching an object to a stand using the device according to any one of claims 1 to 8, **characterized in that**, the crossbar (3) is inserted into the first space (20) in the cavity (13a), and locking is performed by rotating the receiving section (9) relative to the fastening element (2) about the first axis (A), whereby the pillar (1) is inserted into the second space (22), and the pillar (1) is caused to pivot to a locking position in the object, and whereby the pillar (1) intrudes in the space (22a) in the object and is locked in its pivoted position by the at least one resilient lugs (12a, 12b), which encloses the pillar (1) in the cavity (13a).

12. A method for attaching an object to a stand using the device according to any one of claims 1 to 8, **characterized in that**, the crossbar (3) is inserted into the first space (20) in the cavity (13b), locking is performed by rotating the receiving portion (9) relative to the fastening element (2) about the second axis (B) and is caused into a locking position, whereby the crossbar (3) rotates inside a flat cylinder (15) of the receiving portion (9), and
the crossbar (3), in the locking position, is oriented angularly towards the opening (8) and both taps (4a, 4b) rest against a respective fence (14) arranged in the cylinder (15).

13. The method according to any one of claims 10 to 12, whereby the rotation is about 90 degrees.

14. Use of a device according to any one of claims 1 to 8, for securing a detector unit to a stand, when monitoring work that involves heating or sparking, wherein the receiving portion (9) is disposed in a housing that surrounds the detector unit.

15. Use of a method according to any one of claims 10 to 13, for securing a detector unit to a stand, when monitoring work that involves heating or sparking, wherein the receiving portion (9) is disposed in a housing that surrounds the detector unit.
